# EUROPEAN PATENT SPECIFICATION

(11) **EP 2 064 788 B1**
(45) Date of publication and mention of the grant of the patent: **20.11.2013**
(21) Application number: 07800513.9
(22) Date of filing: 29.08.2007
(51) Int. Cl.: H02G 1/02, H02G 7/02, H02G 7/04, H02G 1/04

(54) **A METHOD AND APPARATUS FOR PROVISION OF TEMPORARY CONDUCTOR TENSION SUPPORT IN TRANSMISSION OR DISTRIBUTION CIRCUITS**
VERFAHREN UND VORRICHTUNG ZUR BEREITSTELLUNG EINER VORÜBERGEHENDEN LEITERSPANNHALTERUNG IN ÜBERTRAGUNGS- ODER VERTEILERSCHALTUNGEN
PROCÉDÉ ET APPAREIL DE SUPPORT DE TENSION TEMPORAIRE DE CONDUCTEURS DANS DES CIRCUITS DE TRANSMISSION OU DE DISTRIBUTION

(30) Priority: 30.08.2006 CA 2558681; 30.08.2006 US 840945 P
(43) Date of publication of application: 03.06.2009
(73) Proprietor: Quanta Associates, L.P., Houston, TX 77056 (US)
(72) Inventor: Devine, Clifford William, British Columbia V0H 1P0 (CA); O'Connell, Daniel Neil, British Columbia V0H 1P0 (CA)
(74) Representative: Powell, Stephen David
(86) International application number: PCT/CA2007/001487
(87) International publication number: WO 2008/025132

(56) References cited:
- DE-A1- 19 628 007
- GB-A- 2 354 373
- US-A- 2 654 796
- US-A- 3 346 236
- US-A- 4 661 662

## Description

### Field of the Invention

This invention relates to the field of repair and service to power transmission conductors and in particular to a method and apparatus for provision of temporary conductor tension support in transmission or distribution circuits.

### Background of the Invention

The replacement of sleeves, dead end insulators, and conductor repair require that conductor tension be maintained or altered so that these processes can be safely applied. Often circumstances require the process to be done while the conductors are energized and remain in service.

Present methods require use of conventional chain jacks, or rope blocks to support tension. These devices are heavy, cumbersome, difficult to install, and because they are conductive present a hazard in their application and use. Also in the prior art applicant is aware of the following United States Patents: United States Patent No.4,661,662 which issued to Finke et al. on April 28, 1987 for a Power Line Working Apparatus, and United States Patent No. 4,695,039 which issued to Clossen on September 22, 1987 for a Bracket and Repair Method.

The Finke et al. patent provides an apparatus to permit a live electrical power line to be cut in the field for line service. The apparatus is connected at positions spanning the site of the cut and the attached end portions of the apparatus moved closer to each other to thereby ease the tension on the portion of the line to be cut. Jumper cables are then connected to the live line to form a parallel electric circuit, and the line then cut. The disclosed preferred embodiment includes an elongate support rod of highly insulative material having mounting grips at opposite ends thereof. The mounting grips are attached to the power line on opposite sides of the portion of the line to be cut and the grips then moved closer to each other by the operation of a ratchet mechanism having a ratchet arm driving a threaded rod inwardly into the threaded end sleeve thereby easing tension in the line and creating a slack section of the line to be cut.

The Clossen patent describes a bracket and support system for temporarily supporting electrical conductor lines on towers so as to enable repairs or modifications to the suspension system for the conductor lines. A C-shaped tool is supported on the tower while a tensioning means is connected between the tool and the electrical conductor lines. The tensioning means may be tightened or shortened to support the lines so that repairs or modifications may be made to the suspension system ordinarily supporting the lines. The tensioning means may include slings mounted at their opposite ends so as to span the length of conductor lines where supported on the suspension system, and straps extending between the slings and the C-shaped tool. Ratchets mounted on the slings are used to shorten the length of the slings thereby tensioning the slings towards the tool and de-tensioning the section of conductor line between grips on opposite ends of the slings.

GB 2 354 373 A (Waddington) discloses a conductor supporting assembly, said conductor supporting assembly comprising an opposed-facing pair of first and second tension supports, a parallel pair of flexible first and second elongate members extending between said first and second tension supports, a means for tensioning said first support and second elongate members so as to selectively draw said first and second tension supports towards each other, a first mount cooperating with said first tension support for mounting said first tension support to a connecting section between a tension insulator and the conductor to be serviced, and a second conductor mount cooperating with said second tension support for mounting said second tension support along a conductor segment of a conductor to be serviced, wherein said first and second mounts and first and second tension supports serve so as to extend the conductor segment along and between said first and second elongate members, and wherein said drawing of said first and second tension supports toward each other de-tensions the conductor segment to allow for the service.

### Summary of the Invention

According to a first aspect of the present invention, there is provided a conductor supporting assembly comprising the features of claim 1.

In one embodiment the tension supports are yoke assemblies. The yoke assemblies may be substantially planar and may include a rigid spreader element extending orthogonally between the elongate members. Each yoke assembly may be a rigid yoke, or may include a flexible sling extending from a corresponding spreader element. The spreader element may be adjustable along its length so as to selectively adjust a spacing between the elongate members.

According to a second aspect of the present invention there is provided a method of supporting a conductor comprising the features of claim 10.

### Brief Description of the Drawings

Figure 1 is, in plan view, the conductor support assembly according to one embodiment of the present invention.
Figure 2 is, in front elevation view, the conductor supporting assembly of Figure 1.

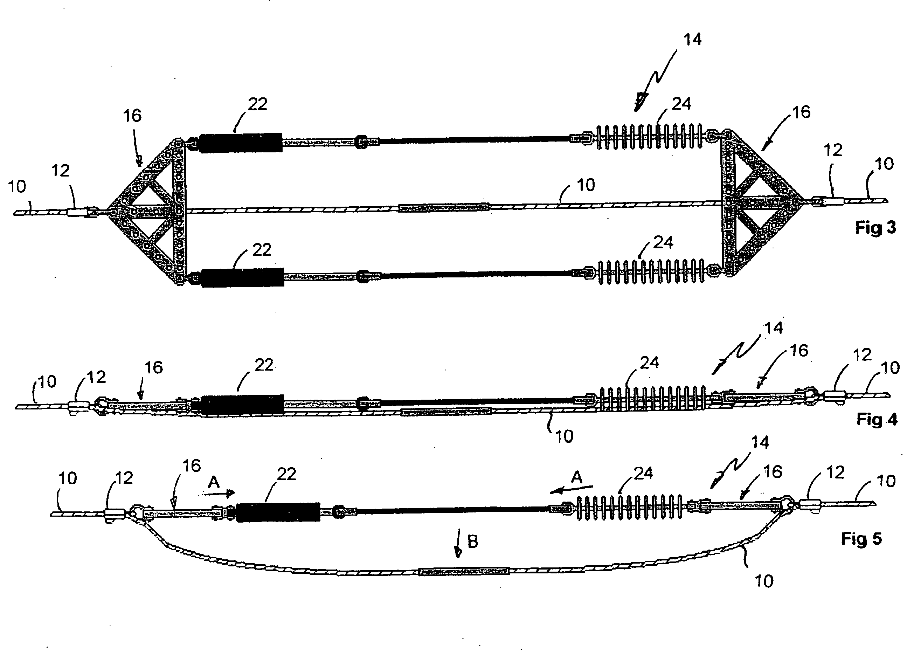

Figure 3 is, in plan view, the conductor supporting assembly of Figure 1 mounted to a conductor.
Figure 4 is, in front elevation view, the conductor supporting assembly of Figure 3.
Figure 5 is, in front elevation view, the conductor supporting assembly of Figure 4 tensioned so as to slacken the conductor between the opposed-facing pair of yokes.

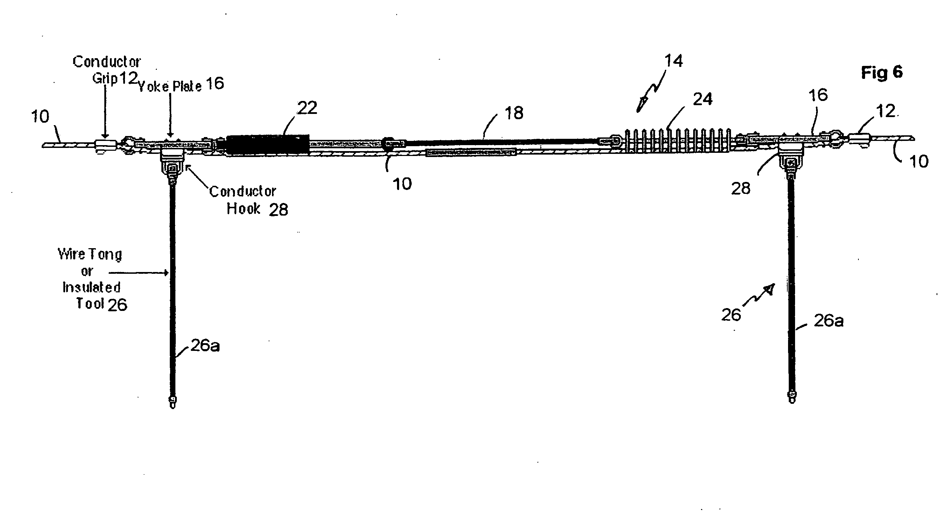

Figure 6 is, in front elevation view, the conductor supporting assembly of Figure 4 with an insulated tool mounted to, so as to depend downwardly from, the corresponding yoke.
Figure 7 is, in plan view, the conductor supporting assembly of Figure 1 with the cable slings adjusted inwardly relative to the opposed-facing pair of yokes so as to decrease the spacing between the pair of parallel cable slings.
Figure 8 is, in front elevation view, the conductor supporting assembly of Figure 7.
Figure 9 is, in plan view, a further embodiment of the conductor supporting assembly according to the present invention wherein the rigid triangular yoke of the embodiment of Figure 1 is replaced with a rigid spreader element supported on a V-shape cable sling.
Figure 10 is, in plan view, a further embodiment of the cable supporting assembly according to the present invention wherein the opposed-facing pair of rigid yokes of Figure 1 are replaced with a rigid spreader element of adjustable length supported by a V-shape cable sling.

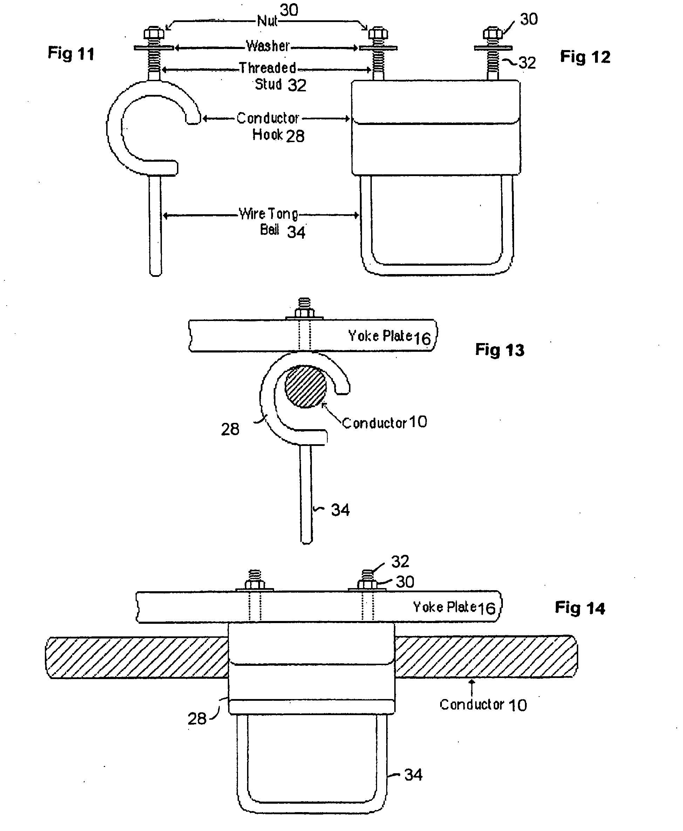

Figure 11 is, in side elevation view, a conductor hook assembly for use with an insulated tool for mounting under a yoke plate according to one embodiment of the present invention.
Figure 12 is, in front elevation view, the conductor hook assembly of Figure 11.
Figure 13 is, in side elevation view, the conductor hook assembly of Figure 11 mounted to the underside of the yoke plate of Figure 1.
Figure 14 is, in front elevation view, the conductor hook assembly of Figure 13 mounted onto a conductor.

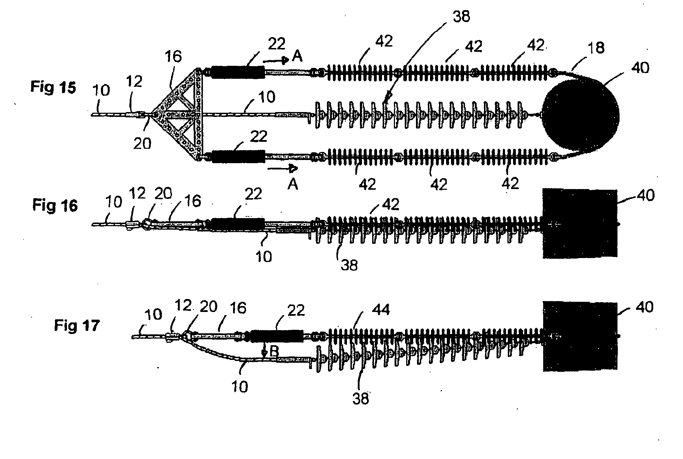

Figure 15 is, in plan view, a further alternative embodiment according to the present invention wherein the conductor supporting assembly is mounted to a support structure so as to relieve the tension on a dead end insulator.
Figure 16 is, in front elevation view, the conductor supporting assembly of Figure 15.
Figure 17 is, in front elevation view, the conductor supporting assembly of Figure 15, tensioned so as to provide slack in the conductor mounted adjacent the dead end insulator.

### Detailed Description of Embodiments of the Invention

Conductor 10 is gripped or secured by a single grip such as a conventional conductor clamp 12 on each end 14a and 14b of the conductor support 14 so that tension support 14 is in contact with conductor 10 throughout the length of the repair operation. Yokes 16 provide an appropriate space di between the two points of attachment 16a and 16b to, as tension is established on, two cable slings 18. Conductor 10 is slackened between yokes 16 as slings 18 are tensioned in directions A, that is to allow conductor 10 to lower in direction B, thus providing a safe and convenient portion of conductor 10, now relieved from tension, for what ever repair or installation is required.

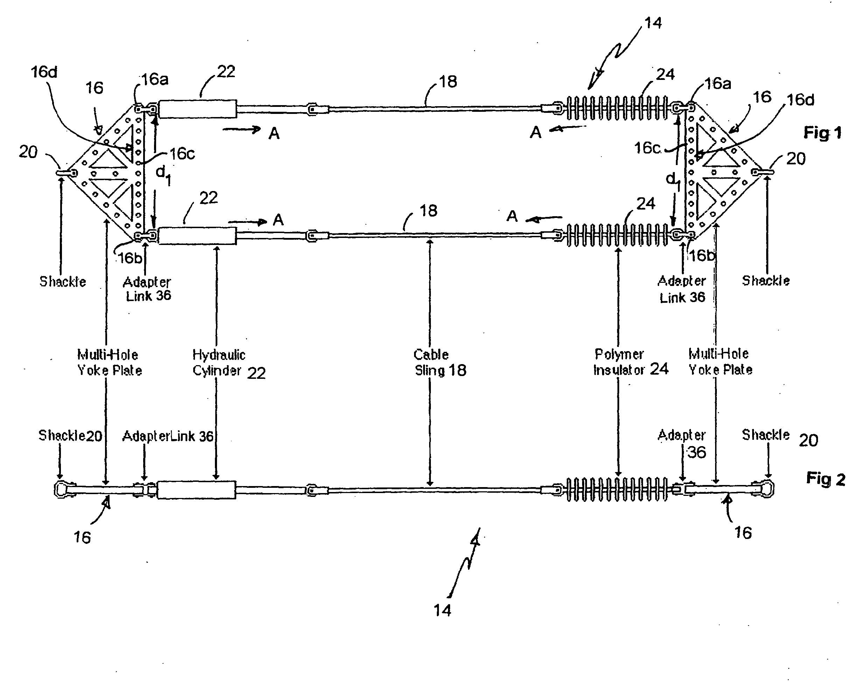

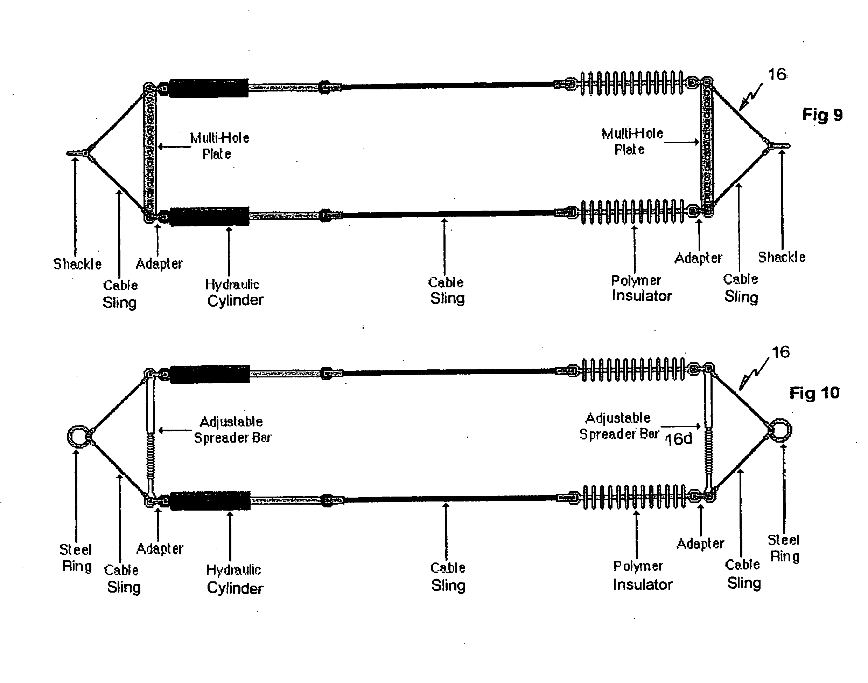

Thus tension support 14 consists of two yokes 16, whether they be the plates illustrated in Figure 1 or the flexible cable and rigid spreader bar yokes of Figure 9 or adjustable or telescopic spreader bar and cable arrangements of Figure 10. One yoke 16 is mounted at each end of the length of conductor 10 to be supported, attached to the conductor with an appropriate grip 12 through a shackle 20. Two hydraulic cylinders 22, or other mechanical tensioning devices tension cable slings 18 between the yokes 16. Cylinders 22 draw the two yokes 16 towards each other, thus relieving tension on the conductor between the two yokes. The cylinders or other tension providing devices can be for example hydraulically, electrically, or manually powered.

Cylinders 22 are mounted to a first yoke 16. The other, second yoke has two insulators 24 mounted to ensure that no current flows through cable slings 18, cylinders 22 or other tension providing mechanism between yokes 16. The cable slings between the two yoke plates can be made as long or as short as the particular job requires, and must have sufficient rated strength to support the known tension that they will be subject to.

Both yokes 16 and their corresponding assemblies are applied or installed using an insulated tool 26 such as for example the wire tong illustrated. Tool 26 isof sufficient length to isolate the installer (not shown) from any electrical hazard. Once a yoke 16 is applied by for example hooking conductor hook 28 over conductor 10 with yoke 16 mounted atop the conductor hook, this insulated tool 26 is left attached and acts as a pendulum so as to keep the yoke 16 properly oriented, for example horizontal, to the conductor segment being repaired or serviced. A yoke 16 may be mounted atop conductor hook 28 by means of, for example, nut and studs 30 and 32 respectively. Conductor hook 28 may be mounted at the tong end of a work pole 26a by means of a bail 34.

In order to provide a current path adequate to the applied load on the subject conductor, a conventional parallel conductor (not shown) must be installed around any intended opening prior to interruption of the normal current path.

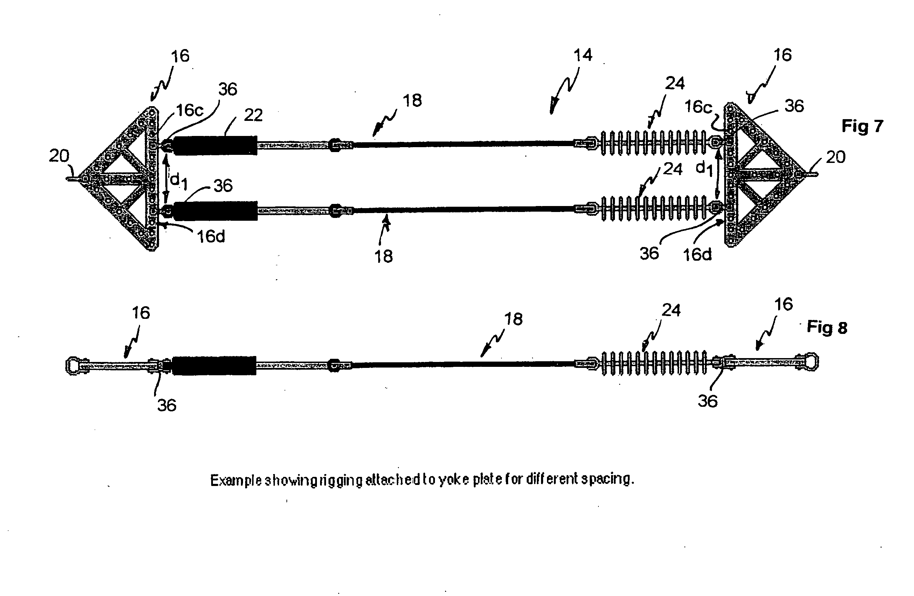

This apparatus can be installed on single or bundled conductors by means of appropriate grips and clevises of adequate strength to support tension of all sub conductors within the bundle. Depending on the width of the conductor bundle (not shown) the spacing d₁ may be increased to the full width allowed by the width of yoke 16 (or to which spacing the yoke may be adjusted for the adjustable width yokes of Figure 10), or reduced such as seen in Figure 7. For example, a yoke width may be in the order of 45.7 to 60.9 cm (eighteen to twenty-four inches), which is not intended to be limiting. Sling assemblies including insulators 24 and cylinders 22 are mounted by means of adapter links 36 for example to a hole 16c in the corresponding array of holes 16c in spreader element 16d of yokes 16.

The changing of dead end insulators 38 or dead end assemblies (not shown) can be achieved by the installation of yoke 16 containing the tensioning devices such as cylinders 24 with cable slings 18 providing support from support tower 40 or structure through appropriate insulating devices 42 applied in series with cable slings 18 and/or tensioning devices 22.

As will be apparent to those skilled in the art in the light of the foregoing disclosure, many alterations and modifications are possible in the practice of this invention without departing from the scope thereof, said scope being defined by the appended claims.

## Claims

1. A conductor supporting assembly comprising:
an opposed-facing pair of first and second tension supports (16) having a parallel pair of flexible first and second elongate members (18) extending therebetween in spaced parallel array, a means (22) for tensioning said first and second elongate members (18) so as to selectively draw said first and second tension supports (16) toward each other, first and second conductor mounts (28) cooperating with said first and second tension supports (16) for mounting said first and second tension supports (16) in spaced apart array to and along a conductor segment of a conductor (10) to be serviced so as to extend the conductor segment along and substantially medially between said first and second elongate members (18) , whereby said drawing of said first and second tension supports (16) toward each other de-tensions the conductor segment to allow for the service, **characterised in that**
the assembly further comprises at least one elongate insulated tool (26) at the end of which at least one of said first and second conductor mounts (28) is mounted, said elongate insulated tool (26) being thereby mountable to a corresponding tension support (16) so as to depend downwardly therefrom and stabilize the mounting of said corresponding tension support (16) onto the conductor segment.

2. The assembly of claim 1 wherein said tension supports are yoke assemblies.

3. The assembly of claim 2 wherein each yoke assembly of said yoke assemblies include a rigid spreader element extending orthogonally between said elongate members.

4. The assembly of claim 3 wherein said each yoke assembly is a rigid yoke.

5. The assembly of claim 4 wherein said each yoke assembly includes a flexible sling extending from a corresponding said spreader element.

6. The assembly of claim 3 wherein said each spreader element is adjustable along its length so as to selectively adjust a spacing between said elongate members.

7. The assembly of claim 2 wherein said yoke assemblies are substantially planar.

8. The assembly of any preceding claim wherein said tension supports are yoke assemblies each including a rigid spreader element, and wherein said tool mounts underneath, in cooperation with, said spreader element.

9. The assembly of claim 1 further comprising at least one insulator mounted in cooperation with and between said elongate members and said tension supports.

10. A method of supporting a conductor comprising the steps of:
a) providing an opposed-facing pair of first and second tension supports having a parallel pair of flexible first and second elongate members extending therebetween in spaced parallel array,
b) providing first and second conductor mounts (28) cooperating with said first and second tension supports (16) and mounting said first and second tension supports in spaced apart array to and along a conductor segment of a conductor to be serviced so as to extend the conductor segment along and substantially medially between said first and second elongate members, and
c) providing a means for tensioning said first and second elongate members and selectively drawing said first and second tension supports toward each other, so as to de-tension the conductor segment to allow for the service, wherein at least one of said first and second conductor mounts (28) is mounted at the end of an elongate insulated tool (26) and wherein the method further comprises the steps of using said elongate insulated tool (26) to mount the at least one of said first and second conductor mounts (28) onto the conductor segment and leaving said elongate insulated tool (26) attached to the conductor mount (28) so as to depend downwardly therefrom and stabilize the mounting of said corresponding tension support onto the conductor segment.

11. The method of claim 10 wherein said tension supports are yoke assemblies.

12. The method of claim 11 wherein each yoke assembly of said yoke assemblies include a rigid spreader element extending orthogonally between said elongate members.

13. The method of claim 12 wherein said each yoke assembly is a rigid yoke.

14. The method of claim 13 wherein said each yoke assembly includes a flexible sling extending from a corresponding said spreader element.

15. The method of claim 12 wherein said each spreader element is adjustable along its length so as to selectively adjust a spacing between said elongate members.

16. The method of claim 11 wherein said yoke assemblies are substantially planar.

17. The method of any of claims 10 to 16 wherein said tension supports are yoke assemblies each including a rigid spreader element, and wherein said tool mounts underneath, in cooperation with, said spreader element.

18. The method of claim 10 further comprising at least one insulator mounted in cooperation with and between said elongate members and said tension supports.

## Patentansprüche

1. Leiterhalterungseinrichtung mit:
einem gegeneinander zeigenden Paar von ersten und zweiten Spannhalterungen (16) mit einem parallelen Paar von flexiblen ersten und zweiten länglichen Elementen (18), die sich dazwischen in einem beabstandeten parallelen Bereich erstrecken, einem Mittel (22) zum Spannen der ersten und zweiten länglichen Elemente, um wahlweise die erste und zweite Spannhalterung (16) aufeinander zu zu ziehen, wobei erste und zweite Leiterhalter (28) mit den ersten und zweiten Spannhalterungen (16) zum Montieren der ersten und zweiten Spannhalterungen in einem beabstandeten Bereich zu und entlang eines Leitersegments eines zu wartenden Leiters (10) zusammenarbeiten, um das Leitersegment entlang und im Wesentlichen medial zwischen den ersten und zweiten länglichen Elementen (18) zu dehnen, wodurch das Ziehen der ersten und zweiten Spannhalterungen (16) aufeinander zu das Leitersegment entspannt, um die Wartung zu ermöglichen,
**dadurch gekennzeichnet, dass**
die Einrichtung ferner wenigstens ein längliches isoliertes Werkzeug (26) aufweist, an dessen Ende wenigstens einer der ersten und zweiten Leiterhalter (28) montiert ist, wobei das längliche isolierte Werkzeug (26) dadurch an einer entsprechenden Spannhalterung (16) montierbar ist, um davon nach unten herab zu hängen und das Montieren der entsprechenden Spannhalterung (16) am Leitersegment zu stabilisieren.

2. Einrichtung nach Anspruch 1, wobei die Spannhalterungen Bügel- oder Jochanordnungen sind.

3. Einrichtung nach Anspruch 2, wobei jede Bügel- oder Jochanordnung der Bügel- oder Jochanordnungen ein starres Spreizelement umfasst, das sich orthogonal zwischen den länglichen Elementen erstreckt.

4. Einrichtung nach Anspruch 3, wobei jede Bügel- oder Jochanordnung ein starrer Bügel oder ein starres Joch ist.

5. Einrichtung nach Anspruch 4, wobei jede Bügel- oder Jochanordnung eine flexible Schlinge umfasst, die sich von einem entsprechenden Spreizelement erstreckt.

6. Einrichtung nach Anspruch 3, wobei jedes Spreizelement entlang seiner Länge einstellbar ist, um wahlweise einen Abstand zwischen den länglichen Elementen einzustellen.

7. Einrichtung nach Anspruch 2, wobei die Bügel- oder Jochanordnungen im Wesentlichen planar sind.

8. Einrichtung nach einem vorhergehenden Anspruch, wobei die Spannhalterungen Bügel- oder Jochanordnungen sind, die jeweils ein starres Spreizelement umfassen, und wobei das Werkzeug unterhalb montiert, in Zusammenarbeit mit dem Spreizelement.

9. Einrichtung nach Anspruch 1, wobei es ferner wenigstens einen Isolator aufweist, der in Zusammenarbeit mit und zwischen den länglichen Elementen und den Spannhalterungen montiert ist.

10. Verfahren zum Haltern eines Leiters mit den Schritten:
a) Bereitstellen eines gegeneinander zeigenden Paares von ersten und zweiten Spannhalterungen mit einem parallelen Paar von flexiblen ersten und zweiten länglichen Elementen, die sich dazwischen in einem beabstandeten parallelen Bereich erstrecken,
b) Bereitstellen von ersten und zweiten Leiterhaltern (28), die mit den ersten und zweiten Spannhalterungen (16) zusammenarbeiten, und Montieren der ersten und zweiten Spannhalterungen in einem beabstandeten Bereich zu und entlang eines Leitersegments eines zu wartenden Leiters, um das Leitersegment entlang und im Wesentlichen medial zwischen den ersten und zweiten länglichen Elementen zu dehnen, und
c) Bereitstellen eines Mittels zum Spannen der ersten und zweiten länglichen Elemente und wahlweisen Ziehen der ersten und zweiten Spannhalterungen aufeinander zu, um das Leitersegment zu entspannen, um eine Wartung zu ermöglichen, wobei wenigstens einer der ersten und zweiten Leiterhalter (28) am Ende eines länglichen isolierten Werkzeugs (26) montiert ist, und wobei das Verfahren ferner den Schritt eines Verwenden des länglichen isolierten Werkzeugs (26) aufweist, um wenigstens eine der ersten und zweiten Leiterhalter (28) am Leitersegment zu montieren, und eines befestigt sein Lassens des länglichen isolierten Werkzeugs (26) an dem Leiterhalter (28), um es davon nach unten abzuhängen und die Lagerung der entsprechenden Stützhalterung am Leitersegment zu stabilisieren.

11. Verfahren nach Anspruch 10, wobei die Spannhalterungen Bügel- oder Jocheinrichtungen sind.

12. Verfahren nach Anspruch 11, wobei jede Bügel- oder Jocheinrichtung der Bügel- oder Jocheinrichtungen ein starres Spreizelement umfasst, das sich orthogonal zwischen den länglichen Elementen erstreckt.

13. Verfahren nach Anspruch 12, wobei jede Bügel- oder Jocheinrichtung ein starrer Bügel oder ein starres Joch ist.

14. Verfahren nach Anspruch 13, wobei jede Bügel- oder Jocheinrichtung eine flexible Schlinge umfasst, die sich von einem entsprechenden Spreizelement erstreckt.

15. Verfahren nach Anspruch 12, wobei jedes Spreizelement entlang seiner Länge einstellbar ist, um wahlweise einen Abstand zwischen den länglichen Elementen einzustellen.

16. Verfahren nach Anspruch 11, wobei die Bügel- oder Jocheinrichtungen im Wesentlichen planar sind.

17. Verfahren nach einem der Ansprüche 10 bis 16, wobei die Spannhalterungen Bügel- oder Jocheinrichtungen sind, die jeweils ein starres Spreizelement umfassen, und wobei das Werkzeug unterhalb montiert in Verbindung mit dem Spreizelement.

18. Verfahren nach Anspruch 10, wobei es ferner wenigstens einen Isolator aufweist, der in Zusammenarbeit mit und zwischen den länglichen Elementen und den Spannhalterungen montiert ist.

## Revendications

1. Un assemblage support de conducteur comprenant:
une paire de premier et second supports de traction (16) se faisant face et ayant une paire parallèle de premier et second éléments allongés (18), flexibles et s'étendant entre ces supports de manière espacée et parallèle, des moyens (22) pour contraindre les premier et second éléments allongés (18) de manière à tirer sélectivement les premier et second support de traction (16) l'un vers l'autre, des première et seconde attaches (28) pour un conducteur coopérant avec les premier et second supports de traction (16) en vue de monter les premier et second supports de traction (16) de manière espacée sur et le long d'un segment de conducteur d'un conducteur (10) devant être réparé et de manière à étendre le segment de conducteur le long et sensiblement de façon médiane entre les premier et second éléments allongés (18), dans lequel la traction des premier et second supports de traction (16) l'un vers l'autre détend le segment de conducteur pour permettre la réparation, **caractérisé en ce que** l'assemblage comprend de plus au moins un outil allongé et isolé (26) à l'extrémité duquel au moins une des première et seconde attaches de conducteur (28) est montée, l'outil allongé et isolé (26) étant ainsi montable sur le support de traction (16) correspondant de façon à être suspendu sous ce dernier et à stabiliser le montage de ce support de traction (16) sur le segment de conducteur.

2. Assemblage selon la revendication 1, dans lequel les supports de traction sont des assemblages fourchus.

3. Assemblage selon la revendication 2, dans lequel chaque assemblage fourchu des assemblages fourchus inclut un élément d'entretoise rigide s'étendant orthogonalement entre les éléments allongés.

4. Assemblage selon la revendication 3, dans lequel chaque assemblage fourchu est un assemblage rigide.

5. Assemblage selon la revendication 4, dans lequel chaque assemblage fourchu inclut une élingue flexible s'étendant depuis l'élément d'entretoise correspondant.

6. Assemblage selon la revendication 3, dans lequel chaque élément d'entretoise est ajustable en longueur de manière à ajuster sélectivement l'espacement entre les éléments allongés.

7. Assemblage selon la revendication 2, dans lequel les assemblages fourchus sont sensiblement plans.

8. Assemblage selon l'une des revendications précédentes, dans lequel les supports de traction sont des assemblages fourchus incluant chacun un élément d'entretoise rigide, et dans lequel l'outil se monte sous, et en liaison avec, cet élément d'entretoise rigide.

9. Assemblage selon la revendication 1 comprenant en outre au moins un isolant monté en liaison avec et entre les éléments allongés et les supports de traction.

10. Procédé de support d'un conducteur comprenant les étapes consistant à :
a) prévoir une paire de premier et second supports de traction se faisant face et ayant une paire parallèle de premier et second éléments allongés, flexibles et s'étendant entre ces supports de manière espacée et parallèle,
b) prévoir des première et seconde attaches (28) de conducteur coopérant avec les premier et second supports de traction (16) et monter les premier et second supports de traction (16) de manière espacée sur et le long d'un segment de conducteur d'un conducteur devant être réparé et de manière à étendre le segment de conducteur le long et sensiblement de façon médiane entre les premier et second éléments allongés, et
c) prévoir des moyens pour contraindre les premier et second éléments allongés et tirer sélectivement les premier et second supports de traction l'un vers l'autre, de manière à détendre le segment de conducteur pour permettre la réparation, dans lequel au moins une des première et seconde attaches (28) de conducteur est montée à l'extrémité d'un outil allongé et isolé (26), et dans lequel le procédé comprend en outre les étapes consistant à utiliser cet outil allongé et isolé (26) pour monter la au moins une des première et seconde attaches (28) de conducteur sur le segment de conducteur et laisser l'outil allongé et isolé (26) attaché à l'attache de conducteur (28) de manière à ce qu'il soit suspendu en-dessous de celle-ci et de manière à stabiliser le montage du support de traction correspondant sur le segment de conducteur.

11. Procédé selon la revendication 10, dans lequel les supports de traction sont des assemblages fourchus.

12. Procédé selon la revendication 11, dans lequel chaque assemblage fourchu des assemblages fourchus inclut un élément d'entretoise rigide s'étendant orthogonalement entre les éléments allongés.

13. Procédé selon la revendication 12, dans lequel chaque assemblage fourchu est un assemblage rigide.

14. Procédé selon la revendication 13, dans lequel chaque assemblage fourchu inclut une élingue flexible s'étendant depuis l'élément d'entretoise correspondant.

15. Procédé selon la revendication 12, dans lequel chaque élément d'entretoise est ajustable en longueur de manière à ajuster sélectivement l'espacement entre les éléments allongés.

16. Procédé selon la revendication 11, dans lequel les assemblages fourchus sont sensiblement plans.

17. Procédé selon l'une des revendications 10 à 16, dans lequel les supports de traction sont des assemblages fourchus incluant chacun un élément d'entretoise rigide, et dans lequel l'outil se monte sous, et en liaison avec, cet élément d'entretoise rigide.

18. Procédé selon la revendication 10 comprenant en outre au moins un isolant monté en liaison avec et entre les éléments allongés et les supports de traction.
